**Europäisches Patentamt**

**European Patent Office**

**Office européen des brevets**

(19)

(11) Veröffentlichungsnummer: **0 192 954 B1**

(12) **EUROPÄISCHE PATENTSCHRIFT**

(45) Veröffentlichungstag der Patentschrift: 25.09.91

(21) Anmeldenummer: 86100740.9

(22) Anmeldetag: 22.01.86

(51) Int. Cl.5: **C05G 3/00, B09B 3/00, C02F 11/14, C09K 17/00**

Die Akte enthält technische Angaben, die nach dem Eingang der Anmeldung eingereicht wurden und die nicht in dieser Patentschrift enthalten sind.

(54) **Mittel zur Melioration geschädigter, mängelbehafteter und/oder Schadstoffe enthaltender Böden und Massen.**

(30) Priorität: 23.01.85 DE 3502171
15.05.85 DE 3517645

(43) Veröffentlichungstag der Anmeldung:
03.09.86 Patentblatt 86/36

(45) Bekanntmachung des Hinweises auf die Patenterteilung:
25.09.91 Patentblatt 91/39

(84) Benannte Vertragsstaaten:
AT BE CH FR GB IT LI LU NL SE

(56) Entgegenhaltungen:
AU-B- 411 723          DE-A- 1 592 812
DE-B- 1 006 871        FR-A- 720 963
FR-A- 780 612          FR-A- 2 274 741
FR-A- 2 492 835        GB-A- 415 644
US-A- 4 242 140

R.W. GRIMSHAW: "The chemistry and physics of clays and allied ceramic materials", vierte Ausgabe, 1971, Seiten 146-147, Ernest Benn Limited, London, GB

Idem

Ullmann Band 23, 311 ff

(73) Patentinhaber: Marx Bergbau GmbH & Co. KG

W-5431 Ruppach-Goldhausen(DE)

(72) Erfinder: Marx, Günther, Dr.
Bergstrasse 16
W-5431 Ruppach(DE)

(74) Vertreter: Becker, Thomas, Dr., Dipl.-Ing.
Eisenhüttenstrasse 2
W-4030 Ratingen 1(DE)

## Beschreibung

Die Erfindung betrifft ein Mittel zur Melioration geschädigter, mängelbehafteter und/oder Schadstoffe enthaltender Böden, insbesondere in der Land- und Forstwirtschaft.

In den letzten Jahren konnte zunehmend eine Verschlechterung des Wachstums bzw. der Gesundheit zahlreicher Pflanzen beobachtet werden. Insbesondere sind größere Teile des Waldbestandes erkrankt. Weiter sind Schäden durch Auswaschungen und Erosionen der Böden zu beobachten.

Es gibt bereits große Waldbereiche, in denen die Bäume praktisch kein Wachstum mehr zeigen, Blätter und Nadeln verlieren und ohne zusätzliche Eingriffe von außen absterben. Gleiches gilt im wesentlichen für den landwirtschaftlichen Bereich.

Ferner gibt es Böden, die eine hohe Schadstoffkonzentration, insbesondere an Schwermetallionen, aufweisen, die entsorgt werden sollen. Infolgedessen hat es an Versuchen nicht gefehlt, die Ursachen derartiger Schäden zu erforschen bzw. die Mangel und/oder toxischen Bestandteile zu analysieren und Gegenmaßnahmen einzuleiten.

Den Waldschäden liegen zahlreiche Ursachen zugrunde, unter anderem die Störung des Nährelementkreislaufes sowie Schadstoffzufuhr von außen.

Der Nährelementkreislauf spielt insbesondere beim Wald eine große Bedeutung. Die Bäume nehmen über ihre Wurzeln lebensnotwichtige Nährelemente aus dem Boden auf, wobei ein Teil im neu gebildeten Holz festgelegt wird, ein wesentlicher größerer Teil aber wiedar aus Zweigen, Nadeln oder Blättern austritt und beispielsweise über den Regen abgewaschen und in den Boden rückgeführt wird. Ferner werden durch Laub- und Nadelfall, durch Früchte, tote Zweige, Rinden etc. erhebliche Nährelementmengen auf die Bodenoberfläche zurückgeführt. Während man früher der Meinung war, daß die Nährstoffversorgung des Waldes auf diese Weise ein für allemal gesichert sei, weiß man heute, daß diese Annahme insbesondere für Standorte mit armen oder degradierten Böden ebenso für Gebiete, in denen der Nährstoffkreislauf beispielsweise durch ungenügende Umwandlung des Rohhumus oder durch Streunutzung gestört ist und Gebiete mit hoher Luftverschmutzung, nicht zutrifft.

Daneben spielen aber auch für die Störung des Nährelementkreislaufes Faktoren wie Art des Bodens, Wasserzu-und abfuhr eine Rolle. Gerade die Wasser- und Luftzu- bzw. abfuhr beeinflußt den Humus- und damit den Stickstoffgehalt des Bodens erheblich.

Bisherige Versuche, die Bodenqualität wieder zu verbessern, um den Nährstoffkreislauf wieder richtig einzustellen, sind im Wesentlichen durch eine ausgewählte mineralische Düngung gekennzeichnet, um so vor allem Stickstoff, Phosphor und Kalium, aber auch Magnesium, Kalzium und Spurennährelemente dem Boden zuzuführen.

Aufgrund dar zum Teil starken Übersäuerung der Böden (pH-Werte zwischen 2 und 3 sind nicht selten) müssen allerdings erhebliche Mengen Dünger eingesetzt werden, um den Sollwert von pH 4,5 bis 6 zu erreichen, ferner haben Langzeitversuche gezeigt, daß eine derartige mineralische Düngung nur eine vorrübergehende Steigerung des Wachstums und dar Gesundung dar Bäume bewirkt. Der Düngung liegt insbesondere dar Mangel zugrunde, daß nur einzelne Nährstoffe zugeführt werden.

Aus der DE-A-1 592 812 ist ein Verfahren zur Herstellung eines Düngers bekannt, bei dem in das Kaolinitschichtgitter von Kaolinen oder kaolinhaltigen Tonen Salze und/oder Moleküle mit Düngerwirkung eingelagert werden.

Schon die DE-B-1 006 871 zeigt, daß ein solcher Dünger nur selektiv wirksam ist und der Stoff zum Beispiel eine hohe Filtrationsgeschwindigkeit aufweist (dort: Spalte 2, I). Deshalb schlägt die DE-B-1 006 871 die Verwendung von Betonit als Bodenverbesserungsmittel anstelle von Kaolin vor (Spalte 4, Zeilen 20, 21).

Derartige Lösungsvorschläge sind jedoch unvollständig, da sie die komplexen Verhältnisse im Boden ausschließlich durch externe Nährstoffzufuhr zu lösen versuchen und damit nur teilweise den lebensnotwichtigen eigenen Nährstoffkreislauf wieder einstellen können.

Mit der Erfindung soll ein Weg vorgeschlagen werden, geschädigte, insbesondere ausgelaugte Böden, aber auch Böden (Massen) mit einem unerwünschten Gehalt an insbesondere toxischen Schadstoffen und Böden, deren organisches Gleichgewicht gestört ist zu verbessern oder regenerieren. Die zu ergreifenden Maßnahmen sollen eine möglichst komplexe Therapie in dem Sinne bewirken, daß der Boden einerseits einen notwendigen Nährstoffhaushalt zurückerhält, andererseits aber auch der Nährstoffkreislauf wieder weitestgehend autark funktioniert. Ferner soll auch die zum Teil vorhandene Geruchtsbelästigung so weit wie möglich beseitigt werden.

Dazu wird ein Mittel mit den Merkmalen des Anspruchs 1 vorgeschlagen.

Soweit erfindungsgemäß von Melioration gesprochen wird, sind hierunter insbesondere auch Verbesserungen aufgrund einmaliger Therapie zu verstehen.

Durch eine Wasseraufnahme vergrößert sich das Volumen, gesättigt wirkt die Tonmineralimischung wasserstauend, so daß nicht nur eine Auflockerung der Böden und damit eine bessere Luft- und Wasserführung erreicht wird, sondern auch die Bildung von Ton-Humus-Komplexen gefördert wird, was seinerseits wieder den Stickstoffanteil im Boden günstig beeinflußt.

Die Verwendung eines Stoffes mit hohem Ionenaustauschvermögen, insbesondere Kationenaustauschvermögen, ermöglicht die Adsorption von Fremd-Kationen, z. B. Schwermetallionen, durch die Tonminerale.

Wichtig für die Wirksamkeit des erfindungsgemäßen Mittels ist aber nicht nur die Tonmineralkomponente, sondern insbesondere ihr Zusammenwirken mit einem oder mehreren mineralischen Düngern und dem Humus.

Als Beispiele für Dünger seien Kalk, Kalksteinmehl, Dolomit sowie Kaliumdünger genannt, darüber hinaus sind aber auch Doppelsalze, z.B. des Kaliums und Magnesiums in Form des sogenannten Patentkalis oder Ammoniumsalze einsetzbar Weitere Mineralstoffe können einzeln oder als Bestandteile der Dünger zugegeben werden.

Kalk dient hauplsächlich als Mittel zur Verbesserung des Reaktionszustandes (Erhöhung des pH-Wertes) und trägt zur Entsäuerung der Böden entscheiden bei. Daneben bewirkt die Aufkalkung des Bodens aber auch eine Erhöhung der Wirksamkeit anderer Nährstoffe.

Bei alkalischen, kalkreichen ton- oder silikatarmen Böden wirkt das erfindungsgemäße Mittel. z.B. als Gemisch mit Superphosphat, Kalimagnesia und Ammoniumsulfat, pH-Wert senkend und gesundes Pflanzenwachstum erheblich steigernd.

Es hat sich nun gezeigt, daß durch die Verwendung eines erfindungsgemäßen Mittels jedoch nicht nur - entsprechend den einzelnen Bestandteilen - eine Addition der einzelnen Einflußfaktoren zu beobachten ist, vielmehr wird der gesamte Nährelementkreislauf besonders auffällig gefördert, offensichtlich aufgrund eines synergistischen Zusammenwirkens der einzelnen Bestandteile und der aktivierten reversiblen Ionenaustauschkapazität. Das erfindungsgemäße Mittel wirkt kurzfristig, aber auch langfristig stabilisierend und wasserspeichernd. So wird der Wasserhaushalt des Bodens in einer vorteilhaften Weise beeinflußt, so daß auch eine Rezirkulation der einzelnen Nährelemente günstig beeinflußt wird. Eine Vergrößerung der sich im Kreislauf bewegenden Mineralstoffe erfolgt aber auch durch eine erhöhte biologische Bindung von atmosphärischem Stickstoff, insbesondere im Humus, durch die Verwitterung der Mineralstoffe im Boden, ebenso wie durch eine Verbesserung der Grundwasserbewegung. Gerade der letztgenannte Einflußfaktor scheint erheblich die Wirksamkeit des erfindungsgemäßen Mittels zu beeinflussen, da die Tonminerale aufgrund ihres Wasseraufnahme- und adsorptionsvermögens nicht nur die Anbindung organischer und anorganischer Schadstoffe ermöglichen, sondern auch ein Ablaufen des Grundwassers erschweren, was stets auch mit einer Abfuhr der im Grundwasser an- und abtransportierten Nährelemente verbunden wäre.

Als wirksam haben sich montmorillonitische Tone erwiesen. Insbesondere eignen sich aber serizitische und/oder illitische Tone, die mit ihrer eigenen mineralogischen und chemischen Zusammensetzung selbst wichtige Nährstoffe in den Boden bringen.

Durch Zugabe des das Ionenaustauschvermögen aktivierenden Stoffes kann die Wirksamkeit dieser Komponente weiter erhöht werden.

Beispielhaft sei hier der Einsatz geringer Mengen von Natriumkarbonat oder Ammoniak genannt.

Ein besonders bevorzugtes Mittel zur Melioration geschädigter Böden enthält eine Mischung aus einem Kalksteinmehl oder kalkhaltigen Dünger, wie Dolomit, Kaliumdünger, sowie einen Anteil montmorillonitischer, illitischer und/oder serizitischer Tonminerale. Ein derartiges Mittel stellt praktisch sämtliche Mangelstoffe im Boden zur Verfügung und bietet darüber hinaus die erwähnten Vorteile der Adsorption von Schadstoffionen.

Aufgrund der Mischung verschiedener Nährstoffträger und Wirkstoffe in der erfindungsgemäßen Kombination wird darüber hinaus gegenüber bekannten Meliorationen bzw. Düngern der wichtige Vorteil erzielt, daß unterschiedlichste Nährstoff- und Wirkstoffkombinationen zusammengestellt werden können. Dies ist deshalb wichtig, weil praktisch jeder Boden unterschiedlich ist, und zwar sowohl in bezug auf seine Nährstoffzusammensetzung, pH-Wert, als auch beispielsweise hinsichtlich seines Wasserdurchlaßvermögens, der Humusbildung etc. Durch Variation der einzelnen Mengenanteile des erfindungsgemäßen Mittels kann für jeden Boden die optimale Mischung zur Melioration zusammengestellt werden.

Insbesondere ermöglicht die Erfindung eine gezielt inhomogen hergestellte Mischung der aktivierten Tonminerale mit den verschiedenen mineralischen Düngern, so daß eine nach Zusammensetzung und Menge unterschiedliche Ionenkonzentration in mehr oder minder fest gebundenen Wasserschichten dem jeweiligen Pflanzenbedarf entsprechend zur Verfügung steht. Das erfindungsgemäße Mittel ist damit universell einsetzbar, je nach Wirkstoffkombination. Es ist nicht mehr notwendig, zur Beseitigung vielschichtiger Schäden unterschiedlich Maßnahmen zu ergreifen, so daß der Einsatz dieses Mittels auch eine bedeutende Kosteneinsparung erbringt.

Die Herstellung der Mischung kann sowohl herstellerseitig erfolgen als auch unmittelbar am Einsatzort.

Das Mittel ist in verschiedenen Formen konfektionierbar. Es bietet sich an, es in Pulverform herzustellen, um später am Einsatzort aufgeschlämmt und verspritzt oder injiziert zu werden. Ebenso ist ein Einstreuen oder Einfräsen in die zu behandelnden Böden und/oder Massen möglich. Auch eine Granulierung ist ohne weiteres möglich, oder die Bereitstellung in mehr oder minder großen Stükken, soweit keine Vermischung mit vorhandenen Bodenarten vorgesehen ist.

In Abhängigkeit von den jeweils herrschenden Bodenverhältnissen beziehungsweise den lokalen Verhältnissen zur Entsorgung schadstoffhaltiger Böden und Massen kann ein erfindungsgemäßes Mittel oberflächlich, beispielsweise in Schichten aufgetragen oder in den zu behandelnden Boden/die zu behandelnde Masse eingebracht werden, zum Beispiel mittels Streu- oder Sprengverfahren. Es ist aber auch möglich, Dichtungsschichten aus oder unter Zusatz eines erfindungsgemäßen Mittels herzustellen, beispielsweise bei Verwendung des Mittels zur Abdichtung von Deponien oder dergleichen.

Häufig wird sich ein flächendeckendes Aufbringen als besonders vorteilhaft erweisen.

Für einen geschädigten, insbesonderer ausgelaugten, sauren Boden (pH gleich 3) wird beispielhaft ein erfindungsgemäßes Mittel folgender Zusammensetzung angegeben:
10 Gewichtsteile aktivierter Tonmineralmischung
5 Gewichtsteile Dolomitmehl (eventuell zum Teil kaustisch gebrannt oder als Hydrat)
3 Gewichtsteile Kalimagnesia (Patentkali)
2 Gewichtsteile Ammoniumphosphal
Die mengenmäßige Dosierung eines erfindungsgemäßen Mittels hängt von den jeweils zu behandelnden Böden/Massen ab. Gewichtsanteile von zwanzig Prozent zur Behandlung geschädigter Böden können deshalb nur als sehr grober beispielhafter Wert betrachtet werden.

## Patentansprüche

1. Mittel zur Melioration geschädigter oder mängelbehafteter Böden, insbesondere ausgelaugter und schadstoffangereicherter Böden aus einer Mischung verschiedener Tonminerale aus den Gruppen Kaoline, Montmorillonite, Serizite und/oder Illite in Kombination mit einem mineralischen Dünger sowie einem Gehalt eines das Ionenaustauschvermögen aktivierenden und/oder das Wasseranlagerungsvermögen regulierenden Stoffes.

2. Mittel nach Anspruch 1, mit einem Gehalt des das Ionenaustauschvermögen aktivierenden und/oder das Wasseranlagerungsvermögen regulierenden Stoffes bis 3 Gew.-%.

3. Mittel nach Anspruch 1 oder 2, bei dem der das Ionenaustauschvermögen aktivierende und/oder das Wasseranlagerungsvermögen regulierende Stoff Natriumcarbonat oder Ammoniak ist.

4. Mittel nach einem der Ansprüche 1 bis 3, bei dem der mineralische Dünger aus Kalk, Dolomit, Kalium-, Ammonium- und/oder Magnesiumsalzen einzeln oder in Kombination besteht.

5. Mittel nach einem der Ansprüche 1 bis 4, gekennzeichnet durch eine Konfektionierung in Pulverform.

6. Mittel nach einem der Ansprüche 1 bis 4, gekennzeichnet durch eine stückige Konfektionierung und/oder Granulatform.

7. Mittel nach einem der Ansprüche 1 bis 6, gekennzeichnet durch eine inhomogene Mischung verschiedener, aktivierter Tonminerale.

## Claims

1. Product for the amelioration of damaged or deficiency-affected soils, especially leached and pollutant-enriched soils, consisting of a mixture of various clay minerals from the groups comprising kaolins, montmorillonites, sericites and/or illites in combination with a mineral fertiliser, and with a content of a substance which activates the ion exchange capacity and/or regulates the water retention capacity.

2. Product according to Claim 1, having a content of up to 3% by weight of the substance which activates the ion exchange capacity and/or regulates the water retention capacity.

3. Product according to Claim 1 or 2, in which the substance which activates the ion exchange capacity and/or regulates the water retention capacity is sodium carbonate or ammonia.

4. Product according to one of Claims 1 to 3, in which the mineral fertiliser consists of lime, dolomite, potassium salts, ammonium salts and/or magnesium salts individually or in combination.

5. Product according to one of Claims 1 to 4, characterised in that it is made up in powder form.

6. Product according to one of Claims 1 to 4, characterised in that it is made up in the form of lumps and/or granules.

7. Product according to one of Claims 1 to 6, characterised by an inhomogeneous mixture of various activated clay minerals.

**Revendications**

1. Produit d'amélioration de sols endommagés et/ou défectueux, en particulier de sols lessivés et riches en substances nocives, provenant d'un mélange de différents minéraux d'argiles dans les groupes du kaolin, de la montmorillonite, de la sérizite et/ou de l'illite, en combinaison avec un engrais minéral ainsi qu'une teneur en une substance activant la capacité d'échange ionique et/ou régulant l'hygroscopie.

2. Produit selon la Revendication 1.- dans lequel la substance activant la capacité d'échange ionique et/ou régulant l'hygroscopie est contenue en une proportion en poids allant jusqu'à 3%.

3. Produit selon la Revendication 1 ou 2.- dans lequel la substance activant la capacité d'échange ionique et/ou régulant l'hygroscopie est du carbonate de sodium ou de l'ammoniac.

4. Produit selon l'une des Revendications 1 à 3.-, dans lequel l'engrais minéral est composé de chaux, de dolomite, de sels de potassium, d'ammonium et/ou de magnesium, individuellement ou en combinaison.

5. Produit selon l'une des Revendications 1 à 4, caractérisé par une confection sous forme pulvérulente.

6. Produit selon l'une des Revendications 1 à 4, caractérisé par une confection sous forme de morceaux et/ou de granulats.

7. Produit selon l'une des Revendications 1 à 6, caractérisé par un mélange non-homogène de différents minéraux d'argiles activés.